# EUROPÄISCHE PATENTSCHRIFT

(11) **EP 2 562 455 B1**
(45) Veröffentlichungstag und Bekanntmachung des Hinweises auf die Patenterteilung: **12.10.2016**
(21) Anmeldenummer: 12181316.6
(22) Anmeldetag: 22.08.2012
(51) Int. Cl.: F16K 37/00

(54) **Verfahren zur Bestimmung einer Losbrechkraft bei einem Stellgerät**
Method for determining a breakaway force in a positioning device
Procédé de détermination d'une force de décollement au niveau d'un appareil de positionnement

(30) Priorität: 22.08.2011 DE 102011052901
(43) Veröffentlichungstag der Anmeldung: 27.02.2013
(73) Patentinhaber: Samson AG, 60314 Frankfurt (DE)
(72) Erfinder: Crespo Vidal, Fausto, 63505 Langenselbold (DE)
(74) Vertreter: Puschmann Borchert Bardehle Patentanwälte Partnerschaft mbB

(56) Entgegenhaltungen:
- DE-A1- 4 419 548
- DE-A1- 4 423 102
- DE-A1- 10 209 545
- DE-A1-102005 004 477
- DE-A1-102008 062 292
- DE-C1- 19 643 297
- US-A- 5 492 009

## Beschreibung

Die Erfindung betrifft ein Verfahren zur Bestimmung einer Losbrechkraft bei einem Stellgerät gemäß der im Oberbegriff des Patentanspruchs 1 angegebenen Art, als auch ein Verfahren zur Durchführung von Partial Stroke Tests nach der im Oberbegriff des Patentanspruchs 3 angegebenen Art.

Bei Stellgeräten, insbesondere bei sicherheitsgerichteten Stellgeräten ist eine gelegentliche Prüfung der Funktionsfähigkeit erforderlich, um ein zuverlässiges Verhalten der Stellgeräte nachhaltig zu gewährleisten.

Allgemein muss zum Verfahren eines Stellglieds eine Losbrechkraft von einem verbundenen Stellantrieb aufgebracht werden, wobei die Losbrechkraft naturgemäß geringfügig größer als die größte im System auftretende Haltekraft ist. Diese maximale Haltekraft kann sowohl im Antrieb als auch in der Stellarmatur begründet sein.

Bei den in der Regel in Ruhe befindlichen Stellgeräten kommt es durch Ablagerung, Korrosion oder aufgrund anderer Einflüsse dazu, dass die Haltekraft im Laufe der Zeit stark variiert. Diese Haltekraft ist im Einzelfall immer unterschiedlich und kann daher nicht vorhergesagt oder im Voraus berechnet werden.

Die US 5,492,009 A offenbart ein Verfahren zum Test eines elektromagnetischen Ventils. Gemäß dem Verfahren wird der zugeführte Strom, also die Antriebsenergie, gemessen. Es wird ein Stromabfall nach Losbrechen detektiert, um ein Maximum zu ermitteln. Das Maximum der Stromkurve wird nach Absinken des Stromwertes ermittelt.

Die DE 10 2008 062 292 A1 betrifft ein Verfahren zur drucksensorischen Verschleißzustandsermittlung einer Ventilmechanik. Gemäß dieser Lehre wird der zum Start der Bewegung eines Ventilglieds benötigte Druckanstiegswert des Steuerdrucks nach erfolgtem Stopp der Bewegung des Ventilglieds mehrfach hintereinander gemessen. Aus diesen Messwerten wird eine statistische Analyse des wahrscheinlichen Einflusses der Haftreibung auf die Bewegung des Ventilkredits ermittelt.

Die DE 196 43 297 C1 offenbart ein Verfahren zur Ermittlung einer Losbrechzeit. Dabei wird die Antriebsenergie zunehmend erhöht, um nach Einsetzen der Bewegung des Stellglieds auf Basis der für die Bewegung des Stellglieds notwendigen Ansteuerzeit die Losbrechzeit auszuwerten. Anhand dieser ermittelten "Losbrechzeit" können Rückschlüsse auf den Zustand des Stellgeräts gezogen werden.

Nachteilig ist, dass zur Analyse des Stellgeräts ein Verfahren des Stellglieds notwendig ist. Eine Bestimmung einer Kraft, die geringfügig kleiner als die prognostizierte Haltekraft ist, kann mit diesem Verfahren nicht vorgenommen werden.

Nach dem Stand der Technik, wird somit die Losbrechkraft bzw. Haltekraft dadurch bestimmt, dass die Antriebskraft so lange (bis zur maximal verfügbaren Antriebskraft) erhöht wird, bis die Losbrechkraft überschritten wurde und das Stellglied verfahren wird.

Dies hat den Nachteil, dass nach dem Losbrechen eine entsprechend hohe Kraft auf das Stellglied wirkt, die aufgrund der deutlich niedrigeren Gleitreibung nicht mehr notwendig ist. Demzufolge wird das Stellglied unkontrolliert über eine gewünschte Sollposition hinaus verfahren. Es kommt zum sogenannten Slip-Stick-Effekt. Dies beeinflusst den laufenden Prozess negativ.

Es ist Aufgabe der Erfindung, einen Zustand des Stellgeräts unter Vermeidung der oben genannten Nachteile wenigstens näherungsweise zu ermitteln, in welchem die maximale Haltekraft vorliegt.

Die Erfindung betrifft ein Verfahren zur Bestimmung einer Losbrechkraft, die geringfügig größer als die maximale Haltekraft ist, in einem Stellgerät, insbesondere einem Sicherheitsstellgerät.

In bekannter Weise umfasst das Stellgerät ein Stellglied, das in Relation zu einem Gehäuse der Stellarmatur verfahrbar ist. Das Stellglied wird durch einen Stellantrieb verfahren, indem durch diesen eine Antriebskraft auf das Stellglied aufgebracht wird. Die Antriebskraft wird erzeugt, indem Antriebsenergie, die in den Antrieb eingebracht wird, über Antriebsmittel in die Antriebskraft gewandelt wird.

Die durch die Antriebsenergie erzeugte Kraft wirkt der Haltekraft, die im Antrieb und / oder in der Stellarmatur begründet ist, entgegen. Eine Bewegung des Stellglieds erfolgt, sobald eine Losbrechkraft erreicht ist und die Haltekraft geringfügig überschritten wurde.

Das Stellgerät befindet sich anfangs in einem Ruhezustand. Davon ausgehend, wird die für die Bewegung des Antriebs erforderliche Antriebsenergie zunehmend, insbesondere schrittweise, erhöht.

Ferner ist wenigstens ein Sensor, insbesondere ein analoger Sensor, zur Messung wenigstens einer Messgröße am Stellantrieb vorgesehen.

Erfindungsgemäß wird, sobald eine Veränderung der Messgröße gegenüber dem Ruhezustand detektiert wird, auf einen Zustand geschlossen, bei dem eine geringfügige Erhöhung der Antriebsenergie zur erforderlichen Losbrechkraft führt. Insbesondere liegt dabei das vom Sensor erzeugte Signal der Messgröße über einem festgelegten Schwellwert. Bei einer iterativen Erhöhung der Antriebsenergie bei Detektion der Messgröße kann darauf geschlossen werden, dass bei einer im nächsten Schritt erfolgenden Erhöhung der Antriebsenergie mit unveränderter Schrittweite das Stellglied losbrechen und damit verfahren wird.

Gemäß dem erfindungsgemäßen Verfahren ist ein Zustand ermittelbar, bei dem zwar annähernd die maximale Haltekraft erreicht ist, noch nicht aber die Losbrechkraft. Entsprechend wird in diesem Zustand das Stellglied noch nicht verfahren. Dadurch kann ein unkontrolliertes Verfahren des Stellglieds unterbunden werden, was negative Einflüsse auf den laufenden Prozess vermeidet. Da für die Prognose der maximalen Haltekraft nur das Ansprechen des Sensors ausgewertet wird, ergibt sich der weitere Vorteil, dass für eine Prognose der Haltekraft kein charakteristisches Zeitverhalten für den Kraftaufbau notwendig ist.

Das Verfahren lässt sich in geeigneter Weise auf pneumatisch oder elektrisch betriebene Stellgeräte anwenden. Bei pneumatischen Antrieben sind erfindungsgemäß Kolben oder Membranantriebe umfasst. Bei pneumatischen Antrieben kann der Kraftaufbau durch entsprechendes Pulsen der Zuluft sehr langsam gestaltet werden, um den gewünschten Gleichgewichtspunkt mit hoher Genauigkeit zu ermitteln. Zudem kann das Verfahren wenigstens auf Stellgeräte mit Schwenkantrieb oder Hubantrieb angewendet werden, wobei die Übersetzung der Bewegung direkt oder über Hebel oder Zahnstangen erfolgen kann.

In einem Beispiel, des nicht Teil der Erfindung ist, kann das Verfahren derart ausgestaltet sein, dass der Sensor als Bewegungssensor oder Positionssensor zur Messung einer Positionsänderung ausgebildet ist.

Dieser Sensor, insbesondere Positionssensor, kann derart angebracht sein, dass er die Positionsänderung eines Antriebsmittels detektiert. Insbesondere wird die Position, beziehungsweise die Positionsänderung eines Bauteils detektiert, das dieselbe Bewegung wie das Stellglied ausführt. Dies kann ein Antriebsmittel selbst oder ein das Antriebsmittel mit dem Stellglied verbindendes Verbindungselement sein. Diese Positionsänderung wird detektiert, ohne dass eine Bewegung des Stellglieds erfolgt.

Das Beispiel der Messung der Position / Positionsänderung an einem Antriebsmittel hat den Vorteil, dass ein ohnehin zur Überprüfung der Bewegung des Stellglieds vorgesehener Sensor auch zur Ermittlung der Losbrech- bzw. Haftkraft verwendet werden kann. Bei diesem Beispiel kann auf eine Kraftgleichheit geschlossen werden, ohne dass ein direkter Krafteintrag gemessen wird.

In vorteilhafter Weise kann das Antriebsmittel bei einem pneumatischen Antrieb für eine Schwenkarmatur eine Antriebswelle sein, die eine translatorische Bewegung von einer an wenigstens einem Kolben befestigten Zahnstange oder einem Hebelgetriebe, in eine Drehbewegung wandelt. Der Kolben ist über eine Dichtung gegenüber dem Stellantriebsgehäuse abgedichtet, wobei die Dichtung aufgrund ihrer Elastizität einen Verformungsbereich aufweist, in welchem sich der Kolben bewegen kann, jedoch die Dichtung noch am Stellantriebsgehäuse haftet. Dadurch ergibt sich eine Mikrobewegung, die eine Detektion der Drehbewegung der Antriebswelle ermöglicht, ohne dass ein tatsächliches Verfahren des Kolbens und somit des Antriebs stattfindet. So kann ohne Verfahren des Stellglieds die maximale Haltekraft prognostiziert werden.

Der Positionssensor kann daher aufgrund der Elastizität der Dichtungen und der Anschläge oder anderer Verspannungen im Gehäuse oder im Gesamtaufbau eine Positionsänderung respektive eine Drehbewegung der Antriebswelle detektieren, bevor eine tatsächliche Bewegung des Antriebs stattfindet. Der relevante Bewegungsbereich des Stellantriebs, vor der tatsächlichen Bewegung des Stellglieds, kann in etwa bei 0,1% bis 1% des gesamten Verfahrbereichs des Stellglieds liegen.

Sobald diese Bewegung detektiert wird, wird auf einen Zustand geschlossen, bei welchem der Antrieb kurz vor dem Losbrechen ist.

Insbesondere bei Hubantrieben, kann eine Haltekraft unter anderem durch eine Dichtung hervorgerufen werden, die zwischen der Stellstange und dem Stellarmaturgehäuse liegt. Die Stellstange verbindet das Stellglied mit dem Antrieb. In diesem Beispiel kann eine Mikrobewegung des Stellglieds mit einem Positionssensor gemessen werden. Die Mikrobewegung liegt im Rahmen des Verformungsbereichs der Dichtung, wobei ein Verfahren nur in einem Bereich stattfindet, bei welchem die Dichtung noch an der Stellstange haftet. Sobald eine Mikrobewegung des Stellglieds, insbesondere durch Detektion einer Positionsänderung, gegenüber dem Gehäuse im Verformungsbereich der Dichtung gemessen wird, wird auf eine annähernde Kräftegleichheit zwischen Halte- und Antriebskraft geschlossen, woraus sich eine annähernde Losbrechkraft ergibt.

Gemäß der Erfindung wird die Verformung des Antriebsgehäuses als Messgröße detektiert. Es wurde festgestellt, dass sich durch das Entgegenwirken von Haltekraft und der von der Antriebsenergie erzeugten Kraft eine elastische Verformung ergibt. Grundsätzlich kann dadurch bei einer vorher festgelegten Verformung auf die annähernde Gleichheit zwischen Halte- und Losbrechkraft geschlossen werden. Dies kann aufgrund der Verformung des Antriebsgehäuses oder aufgrund einer Stauchung oder Dehnung eines Verbindungselements zwischen Stellantrieb und Stellglied erfolgen.

Die Verformung wird mit wenigstens einem Dehnmessstreifen erfasst Der Dehnmesstreifen ist am Antriebsgehäuse angeordnet.

Als besonders vorteilhafte Einbaulage für Sensoren zur Detektion der Verspannung des Antriebsgehäuses bei einem Kolbenantrieb für Schwenkantriebe, wurde der Bereich der Kolben in einer Endlageposition bei maximal gespannten bzw. komprimierten Federn, identifiziert.

Ferner ist es möglich, eine entsprechende Verformung des Antriebsgehäuses auch über einen Positionssensor, der im Abstand zu einer Antriebswelle angeordnet ist, zu messen. Da sich aufgrund der elastischen Verformung ein Versatz von Gehäuse zur Antriebswelle ergibt, wird dies von dem Positionssensor als Positionsänderung erkannt und führt zu einem entsprechenden Signal.

In einer alternation Ausgestaltung, ist als Sensor ein akustischer Sensor vorgesehen, der mit dem Gehäuse des Stellantriebs in Verbindung steht, wobei die Gleichheit der Bewegungskraft und Haltekraft bei einer Detektion eines eindeutigen akustischen Signals angenommen wird. Bei zunehmender Antriebskraft ergibt es sich, dass kurz vor einem Losbrechen des Stellglieds ein akustisches Signal in Form eines "Knackens" auftritt, welches über einen akustischen Sensor aufgenommen und ausgewertet werden kann.

Der akustische Sensor ist als Körperschallsensor ausgestaltet, da dieser vorrangig die über das Gehäuse übertragenen Schwingungen detektiert. Der Körperschallsensor ist somit unempfindlich gegen Umgebungslärm. Dies verbessert das Signal Rauschverhältnis bei der Verwendung eines Körperschallsensors gegenüber einem normalen akustischen Sensor, da das relevante Signal vorrangig als Gehäuseschwingung übertragen wird.

Vorzugsweise wird zur Auswertung der Messgröße ein Sensor verwendet, der eine geringe Hysterese aufweist. Auch eine hohe Empfindlichkeit erweist sich bei der Durchführung des Verfahrens als vorteilhaft.

Als besonders vorteilhaft hat sich die Verwendung eines Magnetfeldsensors als Positionssensor erwiesen. Dieser kann die Position und Orientierung eines, insbesondere auf einer Antriebswelle montierten Magneten mit hoher Genauigkeit und hysteresefrei messen. Im Beispiel eines Schwenkantriebs mit einer Antriebswelle, kann sowohl der durch eine Drehbewegung der Antriebswelle generierte Signalteil, als auch der Signalteil, der sich aus einer lateralen. Verschiebung der Antriebswelle zum Magnetfeldsensor ergibt, ausgewertet werden, um eine Bewegung der Antriebswelle zu erfassen, bevor eine Bewegung des Stellglieds erfolgt

Zur regelmäßigen Überprüfung von sicherheitsgerichteten Ventilen haben sich Partial Stroke Tests etabliert. Bei einem Partial Stroke Test, PST, wird die Armatur um einen Teilbereich ihres Verstellwegs verfahren. Dazu wird insbesondere bei den für die Steuerung des Zuluftdrucks eines pneumatischen Antriebs eingesetzten elektromagnetischen Ventilen ein Puls über eine festgelegte kurze Zeitdauer geschaltet, und der zur Schaltdauer korrespondierende Verfahrweg ermittelt. Da der Verfahrweg in der Regel sehr kurz ist, insbesondere etwa 5% -10% des Stellwegs entspricht, ist auch die Pulsdauer des Stellsignals entsprechend kurz.

Um ein Überfahren des für den Partial Stroke Test vorgegebenen Sollwerts auszuschließen, wird die für die Durchführung des PST notwendige Pulslänge in bekannter Weise durch ein Verfahren ermittelt, bei dem beginnend mit kurzen Pulsen immer längere Pulse ausgegeben werden, bis der erreichte Verfahrweg innerhalb eines für den PST relevanten Verfahrbereichs, von insbesondere 5% -10% des Stellwegs, liegt.

Da die Totzeit des anzusteuernden Stellgeräts möglicherweise größer als die benötigte Ansteuerzeit des Magnetventils ist, wird der Partial Stroke Test mit einer sehr kurzen Pulslänge begonnen. Führt diese Pulslänge nicht zu einer Bewegung des Stellglieds, wird die Pulslänge für den nächsten Zyklus um ein Pulsinkrement verlängert.

Nachteilig an diesem Verfahren ist, dass die Pulsdauer bei einem folgendem Puls nicht so lange sein darf, dass der maximale Verfahrweg überschritten wird. Dies hat zur Folge, dass die Pulsinkremente bei der Pulserhöhung sehr gering sein müssen. Da zusätzlich zwischen jedem Puls eine Pause liegen muss, damit der notwendige Stelldruck im Antrieb wieder aufgebaut werden kann, ist es sehr zeitaufwendig einen erfolgreichen PST durchzuführen.

Es ist ferner Aufgabe der Erfindung ein Verfahren zur Durchführung eines PST anzugeben, womit der PST schnell und zuverlässig durchführbar ist.

In bekannter Weise werden die für den PST notwendigen Pulse mit einer bestimmten Pulslänge an die Stellarmatur gesendet, um die Stellarmatur entsprechend der Pulslänge zu verfahren. Die Pulslänge wird ausgehend von einem sehr kurzen Puls schrittweise um ein Pulsinkrement verlängert, bis eine für den PST relevante Verfahrstrecke erreicht wird.

Erfindungsgemäß wird das Pulsinkrement anfänglich relativ hoch gewählt, und die Pulslänge damit so lange erhöht, bis eine Mikrobewegung der Stellarmatur, insbesondere des Stellantriebs, gemessen wird. Nach Feststellen der Mikrobewegung wird die Pulsinkrement auf sehr kleine Werte reduziert. Neben der Detektion einer Mikrobewegung kann auch eine andere vorgenannte Variante zur Bestimmung der maximalen Haltekraft, wie Messung einer Körperschollschwellwerts oder die Verspannung des Antriebsgehäuses verwendet werden.

Dies hat den Vorteil, dass ein PST trotz der ständigen Erhöhung der Pulslänge um ein Pulsinkrement in sehr kurzer Zeit durchgeführt werden kann, da das Pulsinkrement nicht aus Sicherheitsgründen unnötig klein gewählt werden muss. Durch das erfindungsgemäße Verfahren kann man sich vielmehr mit einem großen Pulsinkrement schnell an die kritische Pulslänge annähern und erst bei Erreichen der kritischen Pulslänge die Länge des Pulsinkrements zu reduzieren. Dadurch wird die benötigte Zeit zur Durchführung eines PST deutlich reduziert und die Zuverlässigkeit eines solchen deutlich erhöht.

In einer weiteren Ausgestaltung zur Verwendung des erfindungsgemäßen Verfahrens, kann bei der Verwendung eines sicherheitsgerichteten pneumatischen oder hydraulischen Stellgeräts, das über ein Magnetventil gesteuert wird, die ermittelte Kräftegleichheit zwischen Antriebskraft und Haltekraft als Nachweis zur Funktionsfähigkeit des Magnetventils herangezogen werden.

Dies erleichtert die Problemeingrenzung bei einer Fehlerdiagnose. Denn nach dem Stand der Technik, bei dem die Funktionsfähigkeit des Stellgeräts durch das Verfahren des Stellgeräts ermittelt wird, kann sofern ein Verfahren des Stellglieds nicht erfolgt, nicht zuverlässig zwischen dem Defekt des Magnetventils oder einem Festsitzen des Stellglieds differenziert werden.

Ferner betrifft die Erfindung ein Stellgerät zur Durchführung des vorgenannten Verfahrens, wobei eine Stellarmatur vorgesehen ist, die ein Stellglied umfasst, das in Relation zu einem Stellarmaturgehäuse bewegbar ist. Das Stellglied ist durch einen Stellantrieb bewegbar, indem durch den Stellantrieb eine Antriebskraft auf das Stellglied ausgeübt wird. Ferner ist wenigstens ein Sensor am Stellantrieb angeordnet. Darüber hinaus sind Mittel zur Auswertung des Sensorsignals zur Bestimmung der maximalen Haltekraft vorgesehen.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:

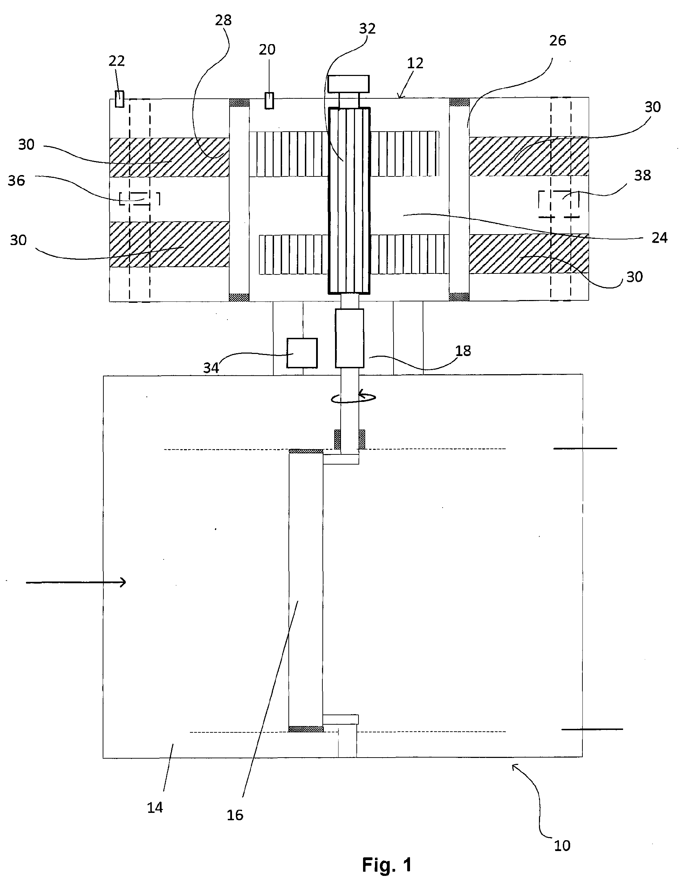

- Fig. 1: eine Stellarmatur mit einem verbundenen Stellantrieb in einer schematischen Schnittansicht.

Fig. 1 zeigt eine sicherheitsgerichtete Stellarmatur 10, die mit einem Stellantrieb 12 verbunden ist in einer schematischen Schnittansicht, wobei das Stellglied in einer Schließstellung bei entlasteter Druckkamer 24 gezeigt ist.

Die Stellarmatur 10 weist dabei ein Stellarmaturengehäuse 14 zum Anschluss an ein Fluidiksystem auf. Im Stellarmaturgehäuse 14 ist ein Stellglied 16 aufgenommen. Dieses ist durch eine Drehbewegung von einer Offen- in eine Schließstellung zu verfahren. Das Stellglied 16 ist über ein Verbindungselement 18 mit einer Antriebswelle 32 des Stellantriebs 12 verbunden. Der Stellantrieb 12 ist als pneumatischer Stellantrieb ausgebildet. Zur Be- und Entlüftung sind entsprechende Anschlüsse 20, 22 vorgesehen. Der Anschluss 20 führt in eine Druckkammer 24, die seitlich über verschiebbare Kolben 26, 28 gegen Federn 30 verschiebbar ist. Der Anschluss 22 führt in eine Federkammer, die auf der anderen Seite der Kolben 26, liegt. An den Kolben 26, 28 ist je eine Zahnstange angelenkt, die mit der Antriebswelle 32 in Eingriff steht und diese bei einer lateralen Bewegung der Kolben 26, 28 dreht. Die Bewegung der Kolben erfolgt bei Beaufschlagung der Druckkammer mit Druckluft gegen die Federn 30, bei einem Ablassen der Druckluft aus der Druckkammer durch die Federn 30. Die wirkende Antriebsenergie, die über die Kolben 26, 28 und die Antriebswelle 32 in Antriebskraft umgesetzt wird, ergibt sich hier aus der Differenz von Federkraft zu Druckkraft.

Gemäß einem Beispiel, das mient Teil der Erfindung ist, ist im Bereich des Verbindungselements 18 ein Positionssensor 34 zur Detektion der Drehbewegung angebracht. Dieser könnte jedoch auch am vom Verbindungselement 18 entfernten Ende der Antriebswelle 32 am Gehäuse des Stellantriebs 12 angeordnet sein.

Gemäß der Erfindung ist wie schematisch dargestellt, entweder ein Dehnmessstreifen 36 oder ein Körperschallsensör 38 am Gehäuse des Stellantriebs 12 angebracht. Eine besonders vorteilhafte Einbaulage des Dehnmessstreifens 36 bzw. des Körperschallsensors 38 ist in der Figur 1 angedeutet. Die Sensoren 36, 38 liegen in vertikaler Richtung in etwa der Mitte der vertikalen Erstreckung des Gehäuses und in horizontaler Richtung im Bereich der Endlageposition der Kolben 26, 28 bei gespannten Federn 30.

Im Falle eines Bewegungstests, bei welchem eine Bewegung des Stellglied 16 und / oder der Kolben 26, 28 aufgrund äußerer Einflüsse oder alterungsbedingt eine erhöhte Losbrechkraft erfordert, wird nun bei Ansteuerung der Stellarmatur 10 eine Bewegung des Stellantriebs 12 detektiert, obwohl noch keine Bewegung des Stellglieds 16 und / oder der Kolben 26, 28 erfolgt. So detektiert beispielsweise der Sensor 34 eine Mikrobewegung des Verbindungselements 18, die kleiner als 1° ist. Wird eine entsprechende Bewegung detektiert, kann darauf geschlossen werden, dass eine Antriebskraft erreicht ist, die nahezu der Losbrechkraft entspricht und annähernd der Haltekraft entspricht.

Dieser Zustand kann auch durch Auslesen des am Gehäuse des Stellantriebs 12 angebrachten Dehnmessstreifens 36 erfolgen, der aufgrund der Verspannung des Gehäuses vor Erreichen der Losbrechkraft seinen Widerstand ändert.

Zudem kann das annähernde Kräftegleichgewicht zwischen Losbrechkraft und Antriebskraft auch durch den Körperschallsensor 38 erkannt werden. Die Verspannungen des Gehäuses führen kurz vor dem Losbrechen des Stellglieds 16 zu einem eindeutig identifizierbaren Geräusch, insbesondere eines "Knackens", welches durch den Körperschallsensor 38 leicht detektierbar ist.

Aufgrund der bestimmbaren nunmehr annähenden Kräftegleichheit zwischen Antriebskraft und Losbrechkraft kann diese Information in besonders vorteilhafter Weise bei der Durchführung von Partial Stroke Tests verwendet werden. Dadurch, dass keine feste schrittweise Annäherung an eine unbekannte Losbrechkraft notwendig ist, kann die Testdauer deutlich verkürzt werden, ohne das Risiko eines Überschwingens einzugehen.

### Bezugszeichenliste

- 10: Stellarmatur
- 12: Stellantrieb
- 14: Stellarmaturgehäuse
- 16: Stellglied
- 18: Verbindungselement
- 20: Anschluss
- 22: Anschluss
- 24: Druckkammer
- 26: Kolben
- 28: Kol ben
- 30: Feder
- 32: Antriebswelle
- 34: Sensor
- 36: Dehnmesstreifen
- 38: Körperschallsensor

## Patentansprüche

1. Verfahren zur Bestimmung eines Kräftegleichgewichts bei einem Stellgerät, insbesondere bei einem sicherheitsgerichteten Stellegerät, umfassend eine Stellarmatur(10), wobei die Stellarmatur (10) ein Stellglied (16) umfasst, das in Relation zu einem Stellarmaturgehäuse (14) bewegbar ist, wobei das Stellglied (16) durch einen Stellantrieb (12) bewegbar ist, indem durch den Stellantrieb (12) eine Antriebskraft auf das Stellglied (16) ausgeübt wird, wobei sich das Stellgerät anfangs in einem Ruhezustand befindet, und davon ausgehend, die für die Bewegung des Stellantriebs erforderliche Antriebsenergie zunehmend erhöht wird, wobei die Antriebsenergie über Antriebsmittel (26, 28, 32) in die Antriebskraft umgewandelt wird, und ferner wenigstens ein Sensor (34, 36 , 38) zur Messung wenigstens einer Messgröße am Stellantrieb vorgesehen ist, und sobald eine Veränderung der Messgröße detektiert wird auf einen Zustand geschlossen wird, bei dem eine Haltekraft, die einer Bewegung des Stellglieds (16) entgegenwirkt, und eine durch die Antriebsenergie erzeugte Antriebskraft annähernd gleich sind, wobei eine geringfügige Erhöhung der Antriebsenergie eine erforderliche Losbrechkraft erzeugen würde, **dadurch gekennzeichnet, dass** als Messgröße Schall gemessen wird, der durch eine mechanische Spannungsänderung des Stellantriebs (12) erzeugt wird, wofür der Sensor als Körperschallsensor (38) ausgebildet ist, der mit dem Gehäuse des Stellantriebs (12) in Verbindung steht.

2. Verfahren nach dem Oberbegriff des Anspruches 1, **dadurch gekennzeichnet, dass** als Messgröße die Verspannung gemessen wird, und wenigstens ein Dehnmesstreifen (36) am Gehäuse des Stellantriebs (12) vorgesehen ist, wobei eine bestimmte Verspannung als Schwellwert festgelegt wird.

3. Partial Stroke Test, unter Verwendung des Verfahrens nach einem der vorangegangenen Ansprüche, bei dem die Antriebsenergie mit jedem Schritt anhand eines Algorithmus erhöht wird, **dadurch gekennzeichnet, dass** eine Schrittweite gewählt wird, bis eine annähernde Kräftegleichheit zwischen der Haltekraft und der Kraft, die durch die Antriebsenergie erzeugt wird, wobei bei annähernder Kräftegleichheit eine weitere Erhöhung mit unveränderter Schrittweite zum Losbrechen des Antriebs führen würde, detektiert wird, und ab dann der Algorithmus zur Anpassung der Schrittweite geändert wird.

4. Partial Stroke Test nach Anspruch 3, **dadurch gekennzeichnet, dass** der Algorithmus zur Anpassung der Schrittweite derart geändert wird, dass die Schrittweite reduziert wird.

5. Vorrichtung zur Durchführung des Verfahrens nach einem der vorangehenden Ansprüche, wobei eine Stellarmatur (10) vorgesehen ist, die ein Stellglied (16) umfasst, das in Relation zu einem Stellarmaturgehäuse (14) bewegbar ist, wobei das Stellglied (16) durch einen Stellantrieb (12) bewegbar ist, indem durch den Stellantrieb (12) eine Antriebskraft auf das Stellglied (16) ausgeübt wird, wobei wenigstens ein Sensor (34,36,38) am Stellantrieb (12) vorgesehen ist.

## Claims

1. Method for determining a balance of forces in a positioning device, in particular in a safety-related positioning device, comprising a control valve (10), which control valve (10) comprises an actuator (16) that can be moved relative to a control valve housing (14), said movement of the actuator (16) being brought about by an actuating drive (12) which latter exerts a driving force on said actuator (16), said positioning device initially being in an idle state starting from which the driving energy required for the movement of the actuating drive is steadily increased, said driving energy being converted into the driving force by drive means (26, 28, 32), and furthermore at least one sensor (34, 36,38) for measuring at least one measurand is provided in the actuating drive, and as soon as a change of the measurand is detected, this is assumed to be indicative of a state in which a holding force, which prevents any movement of the actuator (16), and a driving force generated by the driving energy are approximately equal, in which a minor increase of the driving energy would generate a required breakaway force, **characterized in that** the measurand in this case is the sound generated by a change in the mechanical tension of the actuating drive (12), for which purpose the sensor is designed as a solid borne sound sensor (38) which is connected to the housing of the actuating drive (12).

2. Method as claimed in the preamble of claim 1, **characterized in that** the measurand in this case is strain, and **in that** at least one strain gauge (36) is provided on the housing of the actuating drive (12), with a certain degree of strain being defined as a threshold value.

3. Partial stroke test performed using the method of one of the preceding claims, in which the driving energy is increased with every step on the basis of an algorithm, **characterized in that** a certain step size is selected until an approximate balance of forces is reached between the holding force and the force generated by the driving energy, wherein, once these forces are approximately equal, another increase with unchanged step size is detected which would result in a breakaway of the drive, from which point the algorithm is then modified so as to adjust the step size.

4. Partial stroke test as claimed in claim 3, **characterized in that** the algorithm for adjusting the step size is modified so as to reduce the step size.

5. Device for performing the method of one of the preceding claims, **characterized in that** a control valve (10) is provided which comprises an actuator (16) that can be moved relative to a control valve housing (14), said movement of the actuator (16) being brought about by an actuating drive (12) which latter exerts a driving force on said actuator (16), with at least one sensor (34, 36, 38) being provided on the actuating drive (12).

## Revendications

1. Procédé en vue de la détermination d'un équilibre des forces dans le cas d'un appareil de réglage, notamment d'un appareil de réglage orienté sur la sécurité, comportant une vanne de réglage (10), étant entendu que la vanne de réglage (10) comporte un actionneur (16), qui est mobile en relation par rapport à un boîtier de vanne de réglage (14), l'actionneur (16) étant mobile par un mécanisme de commande (12), en exerçant une force motrice par le mécanisme de commande (12) sur l'actionneur (16),étant entendu que l'appareil de réglage se trouve au début à un état de repos, et en estimant que l'énergie motrice requise pour le mouvement du mécanisme de commande étant augmentée progressivement, l'énergie motrice étant transformée par des éléments d'entraînement (26, 28, 32) en force motrice, et par ailleurs au moins un capteur (34, 36, 38) étant prévu pour la mesure d'au moins une grandeur de mesure sur le mécanisme de commande, et dès qu'une modification de la grandeur de mesure est détectée sur un état, pour lequel une force de rétention qui contrecarre un mouvement de l'actionneur (16), et une force motrice générée par l'énergie motrice sont pratiquement identiques, étant entendu qu'une augmentation minime de l'énergie motrice générerait une force de décollage nécessaire, **caractérisé en ce que** du son est mesuré comme grandeur de mesure, qui est généré par une modification mécanique de tension du mécanisme de commande (12), pour laquelle le capteur est constitué comme capteur sismique (38), qui se trouve en relation avec le boîtier du mécanisme de commande (12).

2. Procédé selon le terme générique de la revendication 1, **caractérisé en ce que** comme grandeur de mesure est mesurée la déformation, et au moins une jauge d'allongement (36) est prévue sur le boîtier du mécanisme de commande (12), une certaine déformation étant déterminée comme valeur seuil.

3. Test de course partielle en utilisant le procédé selon une quelconque des revendications précédentes, lors duquel l'énergie motrice est augmentée avec chaque pas à l'aide d'un algorithme, **caractérisé en ce qu**'un incrément est sélectionné, jusqu'à ce que soit détectée une égalité approximative des forces entre la force de rétention et la force qui est générée par l'énergie motrice, étant entendu qu'en cas d'égalité approximative des forces, une autre augmentation avec incrément inchangé entraînerait le décollage de l'entraînement, et qu'à partir de là, l'algorithme est modifié en vue de l'adaptation de l'incrément.

4. Test de course partielle selon la revendication 3, **caractérisé en ce que** l'algorithme en vue de l'adaptation de l'incrément est modifié de manière à ce que l'incrément est réduit.

5. Dispositif en vue de l'exécution du procédé selon une quelconque des revendications précédentes, étant entendu qu'une vanne de réglage (10) est prévue, qui comporte un actionneur (16), qui est mobile en relation par rapport à un boîtier de vanne de réglage (14), l'actionneur (16) étant mobile par un mécanisme de commande (12), en exerçant une force motrice par le mécanisme de commande (12) sur l'actionneur (16), étant entendu qu'au moins un capteur (34, 36,38) est prévu sur le mécanisme de commande (12).
